# EUROPEAN PATENT APPLICATION

(11) **EP 4 564 176 A1**
(43) Date of publication of application: **04.06.2025**
(21) Application number: 24210906.4
(22) Date of filing: 05.11.2024
(51) Int. Cl.: G06F 11/34, G06T 15/00, G06T 15/80, A63F 13/77

(54) **SHADER MANAGEMENT SYSTEM AND METHOD**

(30) Priority: 30.11.2023 GB 202318314
(71) Applicant: Sony Interactive Entertainment Inc., Tokyo 108-0075 (JP)
(72) Inventor: CERRATO, Maurizio, London, W1F 7LP (GB); GREEN, Lawrence Martin, London, W1F 7LP (GB); LEONARDI, Rosario, London, W1F 7LP (GB); LEUNG, Jun Yen, London, W1F 7LP (GB)
(74) Representative: D Young & Co LLP

(57) **Abstract**

A system for modifying one or more shader configurations, the system comprising an application executing unit configured to execute an application using a first shader configuration, a performance monitoring unit configured to obtain performance data from one or more performance counters associated with a GPU used to execute the application, and a parameter modification unit configured to modify the first shader configuration in dependence upon the obtained performance data to obtain a modified shader configuration, wherein the application executing unit is configured to execute the application using the modified shader configuration as the first shader configuration, and wherein the performance monitoring unit and the parameter modification unit are configured to repeat their respective functions in an iterative manner until a termination condition is met.

## Description

### BACKGROUND OF THE INVENTION

### Field of the invention

This disclosure relates to a shader management system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

Over time there has been an increase in the quality and scale of content that is able to be provided to a user, for instance in the context of video games or rendered video content. Of course, this content is associated with a correspondingly increased processing burden - in order to generate and render such content, the complexity and number of these processes is necessarily increased. While in many cases this can be accommodated by increasingly powerful hardware, it is considered that for a large number of devices this may not be the case. In either case, it may be desirable to increase the efficiency of the processing in order to attempt to maximise the output of the processing hardware.

This attempt to maximise the output of the processing hardware can be referred to as optimisation. This can take many forms, for instance modifying application code to streamline operation of the application. However there are limited options for optimising content for a specific device; in these cases, the available options may be limited to an automatic or user-input adjustment of display quality parameters or the like. The performance of some hardware can also be difficult to predict, such as GPU performance, and as such the results of existing optimisation processes may not be able to be applied on a wider scale - such as being generalised to new or different devices.

It is therefore considered that improved approaches to optimisation of a content rendering process are desirable.

It is in the context of the above discussion that the present disclosure arises.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an exemplary entertainment system;
Figure 2 schematically illustrates a parameter modification method;
Figure 3 schematically illustrates a system for modifying one or more shader configurations; and
Figure 4 schematically illustrates a method for modifying one or more shader configurations.

### DESCRIPTION OF THE EMBODIMENTS

Referring now to the drawings, wherein like reference numerals designate identical or corresponding parts throughout the several views, embodiments of the present disclosure are described.

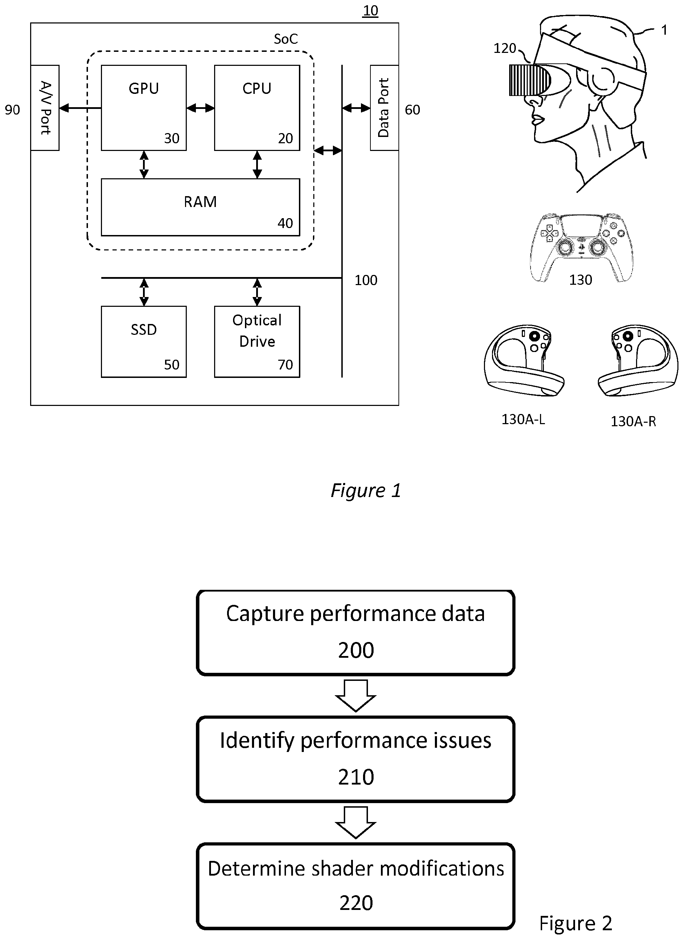

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L/-R) in the case of the HMD.

As described above, the performance of some hardware elements such as GPUs can be rather unpredictable - meaning that it is difficult for a developer to predefine particular parameters or the like to be used during rendering of content. While a number of optimisation tools exist, some of which are specifically for processes being executed by a GPU, many of these are performed offline which limits their ability to successfully optimise the rendering process.

Implementations of the present disclosure instead function while an application, such as a game, is running - this provides more detailed feedback on the rendering performance as the contents of command buffers and the like (which can form the inputs for the shaders, for instance) can be identified. This can enable an improved result to be obtained, in that a compiler can apply a particular shader configuration (identifying selected shaders and corresponding parameters) to the rendering process based upon obtained live and relevant performance data.

Figure 2 schematically illustrates a parameter modification method in accordance with one or more implementations of the present disclosure. Such a method is performed so as to determine an appropriate selection of shaders and/or shader parameters for respective shaders so as to achieve an improved device performance. This improved performance may be measured in respect of resource consumption (such as a processing load), for example, and/or in respect of an improved output - such as achieving a higher rendering quality, frame rate, and/or resolution of video content.

A step 200 comprises capturing performance data for a GPU during execution of an application using default (such as set by the developer of the application or hardware used to execute the application) or otherwise predetermined shader configurations. The application may be any application that leads to the rendering of an image for display - an example of this is a video game, although this is not considered limiting in any way. This performance data may be captured in any suitable manner; one example of this is the capturing of data from GPU performance counters, although any suitable hardware or software monitoring of performance may be considered appropriate.

GPU performance counters can be used to track data such as cache usage or registry accesses, for example. This data may be captured for a single frame, although capturing data for a plurality of frames (such as a predefined number of frames or amount of time) may be preferable as this can enable the captured data to be more representative of the GPU usage of the content as a whole.

While the performance data may be captured only during the rendering of a single frame of content, it may instead be captured during the rendering of a number of consecutive (or otherwise sequential) frames. The captured data may then be used on an individual basis (such as a time series of data that can be analysed), or representative data may be obtained by processing this captured performance data. For instance, particular performance data representing a given metric may be averaged over a number of frames, or a minimum or maximum value from amongst the captured data may be used where appropriate.

A step 210 comprises identifying one or more performance issues from the captured performance data. Here, performance issues can mean any undesirable performance - there need not be any errors or the like. For instance, if the counters indicate that a cache is not being used efficiently this may be considered to be a performance issue. Similarly, high usage of particular resources or high incidence of particular processing steps may be indicative of bottlenecks in the process. It is therefore apparent that any output of the performance counters which is indicative of inefficient or ineffective processing may be identified at this stage.

A step 220 comprises determining and applying one or more shader modifications in response to the identification of step 210. A shader modification may include any change to the operation of the processing device in respect of shaders - for example, selection of an alternative shader which performs the same (or a similar) function, or modification of parameters associated with a shader so as to change how the shader is executed.

However the modification is to be implemented, the modification is determined on the basis of the identified performance issues so as to mitigate those issues. In some cases this may be a trial-and-error approach in which different modifications are trialled until an improvement is obtained - however in other cases a more targeted approach may be considered in which predictions are used to identify particularly suitable modifications (or apparently suitable, as predictions may not have a one hundred percent accuracy) or a convergent approach is used to identify a suitable shader configuration.

Shader modifications may be considered in isolation or in combination when seeking to improve performance; a shader-by-shader approach may be simpler to implement, as the results of the modification may be easier to predict, however it can be more efficient to consider modifications on a multi-shader basis in some implementations.

While discussed here as a linear process, this may instead be implemented in an iterative manner. In this case, the application is executed using the updated shader selection and/or using the updated shader parameters as appropriate. Each of the above steps can then be repeated, such that new performance data is captured and used to identify performance issues, and new shader modifications generated. This iterative process may be implemented in an automated fashion, rather than relying on specific user inputs to initiate each iteration, and the steps may be repeated any suitable number of times. This iterative approach may be adopted for the same content on each iteration (that is, the content is kept constant), or may be performed throughout the rendering of the content such that each of the iterations is performed on the basis of different parts of the content.

Automation of the process may be particularly advantageous; particularly in the case of capturing the performance data from GPU performance counters. This is because it may be advantageous to perform multiple passes with this method to capture a range of data; for instance, in some implementations there may be several hundred performance counters in a GPU while it is only possible to capture a small number of these at a time due to hardware limitations. It may therefore be desirable to capture data over a number of passes so as to obtain performance data from a number of different counters.

Automation of this process may be further advantageous in the case in which different counters are to be sampled at the same time point during the rendering process (for instance while the same calculations are being performed as a part of rendering a particular frame). In such implementations, the automation can include automating the generation of the content so as to generate the correct capture conditions for obtaining the desired performance data.

As noted above, the determination of the shader modifications can be performed in a number of different manners.

In some cases, it may be suitable to perform a structured modification in which the performance data (or identified performance issue) is directly correlated to a particular modification. The correlation itself may be dependent upon the shaders currently in use, for example. This correlation may be provided in the form of a look-up table or the like which indicates that a particular shader substitution or parameter modification should be performed in response to a particular identification. Alternatively, or in addition, the structured modification may describe changes to current parameters/shader selections rather than a target parameter/shader selection.

A random modification may also be considered as an option; this may be particularly suitable when there are a limited number of modifications are possible, or in a case in which the impact of modifications is difficult to predict. By gathering performance data for a series of random shader parameters, it may be possible to identify which modifications correlate to an improved performance - in this case, one of the random modifications can be used, or can be selected as the basis for further modification. This further modification may also be random, albeit within a reduced range of possible parameter modifications (such as a random selection of a subset of shader alternatives or a decreased range of shader parameters) so as to cause the random modifications to be closer (at least on average) to the selected modifications than a fully random selection. Alternatively, the selected modifications can be used as the basis of an alternative determination process.

In some implementations, a predictive model may be used to determine appropriate shader modifications to be implemented. Such a model may be configured to identify suitable modifications based upon input performance data and current shader configuration. In some cases, the predictive model may be a machine learning model which is trained, based upon a dataset of correlated shader configurations and performance data; this training data may also be tagged with information about the content which is being rendered so as to enable a specialisation of the model towards modifications for specific content, thereby potentially increasing the effectiveness and/or efficiency of the modification process.

A convergent approach to the modifications may be considered appropriate in some implementations. For instance, a hyper-parameter optimisation technique may be used to arrive at a suitable set of shader parameters and/or a suitable selection of shaders. Any suitable convergent approach may be used, and may be considered advantageous in that such approaches offer a more targeted approach to obtaining suitable configurations of shaders. In the convergent approach, an iterative method is performed in which the difference in performance between each iteration is used (along with the associated shader configuration) to determine a next configuration to attempt - in this manner, it is expected that shader parameters which are suitable (that is, correlated with good GPU performance) are retained while those which are not are abandoned as the process converges on a particular configuration. Any modifications which lead to a worsening of the GPU performance (in respect of one or more metrics) would not be pursued by such an approach, as modifications which are correlated with an improvement are favoured.

In some implementations, a number of predetermined configurations of shaders and/or shader parameters may be defined. An iterative process may utilise each (or at least a selection) of these configurations in turn. While none of these predetermined configurations would necessarily be expected to provide an optimal configuration, they may provide a useful set of initial performance data from which to identify further configurations that may lead to improvements. For instance, correlations between these predetermined configurations and respective performance data may be used to inform a predictive model or initial modifications in a convergent approach.

Any or each of these approaches may be utilised in the search for a suitable shader configuration, in any preferred combination as appropriate for a given implementation.

When an iterative approach is adopted, any suitable termination condition may be utilised as appropriate for a given implementation. For instance, in a convergent approach a suitable termination condition may be that successive iterations are providing a below-threshold modification of shader parameters or that a statistical analysis indicates that the approach has converged upon a particular shader configuration to a suitable degree.

Suitable termination conditions may include any one or more of a predefined number of iterations, successive iterations providing a below-threshold modification of shader parameters, statistical analysis indicates that the approach has converged upon a particular shader configuration to a suitable degree, termination of the application by the user (or other termination), a threshold amount of time having elapsed, a particular segment of content ending (such as a cut scene or calibration portion), performance data (or changes in performance data) meeting particular thresholds or conditions, and/or a user command to terminate the process.

Parameter modification methods (that is, methods which enable the obtaining of an improved shader configuration such as the method described with reference to Figure 2) in accordance with the present disclosure may be implemented in a variety of different contexts as appropriate for particular users, hardware, and/or software. In some implementations the parameter modification may be performed during use of the application (such as during gameplay of a game); this can be during general use, or a particular segment or task within the application may be marked as suitable for a parameter modification process to be performed (such as during a cut scene or a portion of game in which the user is not particularly active).

Alternatively, or in addition, loading screens in games may be considered to be suitable portions of content during which to perform the shader modification; this would be particularly suitable in the case that the loading screens comprise gameplay footage or the like such that they simulate normal display of the game.

In some implementations, it may be considered suitable to provide a specific calibration stage during which the parameter modification can be performed. This may be advantageous in that the calibration stage can include standardised content, which can enable a streamlined modification to be performed - this is because information about the standardised content (for instance, benchmarking data for a number of different hardware arrangements) can be leveraged to improve the selection of a new shader configuration based upon the current configuration and performance data.

In some cases it may be considered appropriate to limit the ability of a user to control a camera or field of view in the content during the process; this can be particularly useful in the case in which an iterative approach is taken that uses the same content portion repeatedly, or in which a standardised testing routine is used.

However, in some cases it may be considered preferable to instead encourage the user to interact in a natural manner with the content as this may improve the quality of the parameter modification process. This is because the parameter modification process can then be tailored to a particular user's playstyle or the like. For instance, a user who looks at the sky more than the average user may benefit from a shader configuration which offers a greater emphasis upon shaders associated with high quality rendering of the sky - whereas a user who barely looks up may benefit from the use of shaders associated with efficient rendering of the sky. In this manner, the selection of a suitable shader configuration may be made specific to a particular user so as to balance efficiency and quality considerations (for example) in a manner that provides a better experience for that user.

Once obtained, a particular shader configuration may be utilised for future rendering of the same content or application. However, if a user is to interact with different portions of the content or application, then it may be appropriate to perform the parameter modification process again (either from the beginning, or based upon the particular shader configuration) to ensure that the particular shader configuration is still suitable. Another reason to consider deviating from reuse of the particular shader configuration is in the case of updates to the content or drivers associated with hardware, each of which may impact the performance of the hardware using a particular shader configuration.

While described above in the context of determining a shader configuration for content as a whole, it is also considered that shader configurations may be determined on a more granular level. In other words, shader configurations may be defined for different portions of the content; these portions may be defined in any suitable manner. For instance, a video game may have portions relating to different game modes having varying display presentation, such as single player and split-screen multiplayer, or modes having different rules such as a standard football match and a five-a-side football match. Similarly, portions may be defined relating to particular segments of a game, such as a particular virtual environment, stage of the game, and/or segments featuring particular characters or virtual objects. In some cases, the segments may be defined in view of a number of different parameters - such as a segment which features a particular virtual environment and character.

In such implementations, the shader modification process may be performed for each segment on an independent basis. In this case, the shader modification process may be performed each time the user encounters a particular segment (such as launching a particular game mode) or at least the first time it is encountered; alternatively, or in addition, an extended process may be performed upon initiation of the game or application (for example) in which shader configurations can be determined for a plurality of segments sequentially.

In some implementations, one or more GPU performance counters may be monitored during normal use of the application; this may be a full range of counters being monitored in succession, or a subset of the full range of counters being monitored on a more regular basis. The output of these performance counters can be used to determine whether the shader configuration that is being used is appropriate, or whether a new configuration should be determined. Indicators of the configuration being inappropriate include threshold values for counters being exceeded (or not being met, as appropriate), or deviation in the values of the counters from preferred values (for instance, set by a developer or the values observed during the modification process) by a threshold amount. This is a process that can be performed in the background during use of the application, such that the user need not be aware that it is occurring.

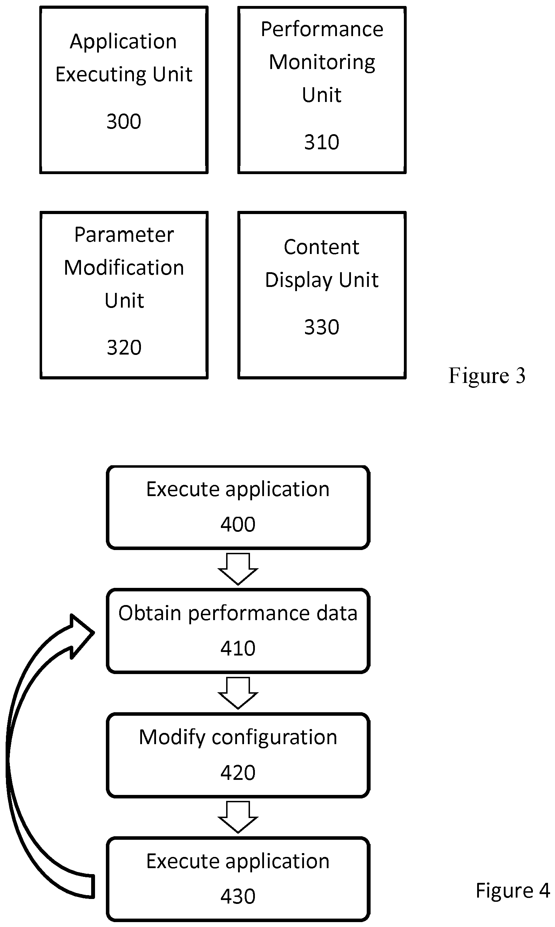

Figure 3 schematically illustrates a system for modifying one or more shader configurations, the system comprising an application executing unit 300, a performance monitoring unit 310, a parameter modification unit 320, and an optional content display unit 330. The modification process that is performed by the system of Figure 3 may be implemented in accordance with any of the details described within this disclosure, such as the discussion with reference to Figure 2. A shader configuration may include any selection of shaders and one or more parameters for those shaders which control the operation of the respective shader, and as such a modification of the configuration may include any change of the parameters and/or substitution of shaders for alternatives.

The application executing unit 300 is configured to execute an application using a first shader configuration; this application may be any application which generates image content for display, with one example of such an application being a video game.

The performance monitoring unit 310 is configured to obtain performance data from one or more performance counters associated with a GPU used to execute the application. Further information about the application, and/or one or more rendered images, may also be obtained to aid in characterising the performance data where appropriate.

The performance monitoring unit 310 may be configured to obtain performance data during the rendering of a plurality of frames of image content output by the application, rather than being limited to the obtaining of performance data during a single frame. In some implementations it may be considered advantageous to average the performance data over a plurality of frames, as this may generate performance data that is more likely to be representative of the application (or at least a segment of the application content) rather than a single frame. In other words, this can enable a more reliable generalisation of the results.

The performance monitoring unit 310 may be configured to obtain performance data over a plurality of passes; that is, the performance monitoring unit 310 may be configured to obtain performance data across several executions of the same part of the application. For instance, the same frames may be rendered multiple times in succession, with each set of the same frames corresponding to a single pass. This may be performed to ensure that consistent performance data is obtained on each pass; alternatively, or in addition, each of a plurality of the passes is associated with the obtaining of data for a different set of performance metrics (that is, obtaining performance data from a different set of performance counters). The different set of performance metrics may be overlapping with another set which is monitored, in that more than one set may comprise a particular performance metric, or may be completely different.

The parameter modification unit 320 is configured to modify the first shader configuration in dependence upon the obtained performance data to obtain a modified shader configuration; this modified shader configuration is then able to be used as the first shader configuration for further execution of the application by the application executing unit 300. This further execution may comprise executing the same (or at least an overlapping) portion of the application using different parameters, or a different portion of the application (such as the rendering of the next-consecutive set of frames) may be executed.

The parameter modification unit 320 may be configured to modify the first shader configuration by selecting one or more alternative shaders and/or modify one or more shader parameters associated with the first shader configuration.

The parameter modification unit 320 may be configured to perform the modification in accordance with any suitable scheme or process. For instance, the parameter modification unit 320 may be configured to modify one or more aspects of the first shader configuration in dependence upon a random factor. Alternatively, or in addition, the parameter modification unit 320 may be configured to modify one or more aspects of the first shader configuration in dependence upon a convergence model. A further alternative, or additional, approach is that in which the parameter modification unit 320 is configured to modify one or more aspects of the first shader configuration in dependence upon a predefined mapping between performance data and modifications, such as one obtained from a look-up table.

Rather than being performed as a single-iteration process, it may be considered advantageous to utilise an iterative approach to the modification of shader configurations in accordance with the present disclosure. In such a case, the performance monitoring unit 310 and the parameter modification unit 320 are configured to repeat their respective functions in an iterative manner until a termination condition is met, with each iteration utilising the newly-modified shader configuration output by the parameter modification unit 320 in the previous iteration.

The termination condition may be defined in any suitable manner for a given implementation; examples of suitable termination conditions include:
1. a predefined number of iterations of the modification process having been performed;
2. successive iterations of the modification process providing a below-threshold degree of modification to the shader configuration;
3. an input by a user of the application being received;
4. a threshold period of time having elapsed during execution of the modification process;
5. a predetermined segment of the application ending, such as the end of a level or a calibration stage; and/or
6. obtained performance data, or changes in the obtained performance data relative to performance data of a preceding iteration, meeting particular thresholds.

Once terminated, it is considered that the shader modification process may be restarted under any appropriate conditions. For instance, the system may be configured to restart the modification process in response to the initiation of a new segment of the application. Alternatively, or in addition, the performance monitoring unit 310 may be configured to obtain performance data during execution of the application outside of the modification process, and the system may be configured to restart the modification process in response to obtained performance data meeting one or more predetermined conditions, such as falling below or exceeding a threshold value in respect of a particular metric or group of metrics.

The optional content display unit 330 may be provided for the output of image frames generated by the execution of the application by the application executing unit 300.

The arrangement of Figure 3 is an example of a processor (for example, a GPU, TPU, and/or CPU located in a games console or any other computing device) that is operable to modify one or more shader configurations, and in particular is operable to:
execute an application using a first shader configuration;
obtain performance data from one or more performance counters associated with a GPU used to execute the application; and
modify the first shader configuration in dependence upon the obtained performance data to obtain a modified shader configuration; and
execute the application using the modified shader configuration as the first shader configuration, wherein the method is implemented in an iterative manner until a termination condition is met.

Figure 4 schematically illustrates a method for modifying one or more shader configurations in accordance with the implementations described elsewhere in the present disclosure; this method may be implemented in accordance with the hardware discussed with reference to Figure 3, for example.

A step 400 comprises executing an application using a first shader configuration.

A step 410 comprises obtaining performance data from one or more performance counters associated with a GPU used to execute the application.

A step 420 comprises modifying the first shader configuration in dependence upon the obtained performance data to obtain a modified shader configuration.

A step 430 comprises executing the application using the modified shader configuration as the first shader configuration.

Following step 430, the method returns to step 410 so as to perform the method in an iterative manner until a specified termination condition is met.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for modifying one or more shader configurations, the system comprising:
an application executing unit configured to execute an application using a first shader configuration;
a performance monitoring unit configured to obtain performance data from one or more performance counters associated with a GPU used to execute the application; and
a parameter modification unit configured to modify the first shader configuration in dependence upon the obtained performance data to obtain a modified shader configuration,
wherein the application executing unit is configured to execute the application using the modified shader configuration as the first shader configuration, and
wherein the performance monitoring unit and the parameter modification unit are configured to repeat their respective functions in an iterative manner until a termination condition is met.

2. A system according to claim 1, wherein the application is a video game.

3. A system according to any preceding claim, wherein the performance monitoring unit is configured to obtain performance data during the rendering of a plurality of frames of image content output by the application.

4. A system according to any preceding claim, wherein the performance monitoring unit is configured to obtain performance data over a plurality of passes.

5. A system according to claim 4, wherein each of the plurality of passes is associated with the obtaining of data for a different set of performance metrics.

6. A system according to any preceding claim, wherein the parameter modification unit is configured to modify the first shader configuration by selecting one or more alternative shaders and/or modify one or more shader parameters associated with the first shader configuration.

7. A system according to any preceding claim, wherein the parameter modification unit is configured to modify one or more aspects of the first shader configuration in dependence upon a random factor.

8. A system according to any preceding claim, wherein the parameter modification unit is configured to modify one or more aspects of the first shader configuration in dependence upon a convergence model.

9. A system according to any preceding claim, wherein the parameter modification unit is configured to modify one or more aspects of the first shader configuration in dependence upon a predefined mapping between performance data and modifications.

10. A system according to any preceding claim, wherein the termination condition is one or more of:
1. a predefined number of iterations of the modification process;
2. successive iterations of the modification process providing a below-threshold degree of modification;
3. an input by a user of the application;
4. a threshold period of time having elapsed;
5. a predetermined segment of the application ending; and/or
6. obtained performance data, or changes in the obtained performance data relative to performance data of a preceding iteration, meeting particular thresholds.

11. A system according to any preceding claim,
wherein the performance monitoring unit is configured to obtain performance data during execution of the application outside of the modification process, and
wherein the system is configured to restart the modification process in response to obtained performance data meeting one or more predetermined conditions.

12. A system according to any preceding claim, wherein the system is configured to restart the modification process in response to the initiation of a new segment of the application.

13. A method for modifying one or more shader configurations, the method comprising:
executing an application using a first shader configuration;
obtaining performance data from one or more performance counters associated with a GPU used to execute the application;
modifying the first shader configuration in dependence upon the obtained performance data to obtain a modified shader configuration; and
execute the application using the modified shader configuration as the first shader configuration,
wherein the method is implemented in an iterative manner until a termination condition is met.

14. Computer software which, when executed by a computer, causes the computer to carry out the method of claim 13.

15. A non-transitory machine-readable storage medium which stores computer software according to claim 14.
